(19) **Europäisches Patentamt**
**European Patent Office**
**Office européen des brevets**

(11) **EP 4 340 155 A1**

(12) **EUROPEAN PATENT APPLICATION**

(43) Date of publication:
**20.03.2024 Bulletin 2024/12**

(21) Application number: **23194982.7**

(22) Date of filing: **01.09.2023**

(51) International Patent Classification (IPC):
**H02J 3/16** (2006.01)     **H02J 3/18** (2006.01)
**H02J 3/38** (2006.01)     **H02J 3/50** (2006.01)

(52) Cooperative Patent Classification (CPC):
**H02J 3/18; H02J 3/16; H02J 3/381; H02J 3/50;**
**Y02E 10/56**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **13.09.2022   CN 202211111626**

(71) Applicant: **Huawei Digital Power Technologies**
**Co., Ltd.**
**Shenzhen, Guangdong 518043 (CN)**

(72) Inventors:
• **XU, Fei**
  **Shenzhen, 518043 (CN)**
• **YU, Xinyu**
  **Shenzhen, 518043 (CN)**
• **XIN, Kai**
  **Shenzhen, 518043 (CN)**
• **CHEN, Dong**
  **Shenzhen, 518043 (CN)**
• **YAO, Xiaofeng**
  **Shenzhen, 518043 (CN)**

(74) Representative: **Gill Jennings & Every LLP**
**The Broadgate Tower**
**20 Primrose Street**
**London EC2A 2ES (GB)**

(54) **REACTIVE POWER ADJUSTMENT METHOD AND PHOTOVOLTAIC POWER GENERATION SYSTEM**

(57)     A reactive power adjustment method and a photovoltaic power generation system are provided to implement stable operation of a power grid. The reactive power adjustment method includes: monitoring a voltage of a point of common coupling; when the voltage of the point of common coupling exceeds a preset range, generating a first drive signal by using a first reactive power value determined based on the voltage of the point of common coupling, and adjusting, based on the first drive signal, reactive power output by an inverter, to enable the voltage of the point of common coupling to be within the preset range; and when the voltage of the point of common coupling is within the preset range and a reactive scheduling instruction of the power grid is received, generating a second drive signal by using a second reactive power value determined based on the reactive scheduling instruction of the power grid, and adjusting, based on the second drive signal, the reactive power output by the inverter.

FIG. 1

EP 4 340 155 A1

**Description**

**TECHNICAL FIELD**

This application relates to the field of photovoltaic power generation technologies, and in particular, to a reactive power adjustment method and a photovoltaic power generation system.

**BACKGROUND**

As clean renewable energy, new energy is widely used. As a new energy power generation system, photovoltaic power generation can convert light energy into electric energy and output the electric energy to a power grid. Generally, a point of common coupling (point of common coupling, PCC) is included between an inverter of a photovoltaic power generation system and a power grid. The inverter outputs electric energy generated by the photovoltaic power generation system, and transmits the electric energy to the power grid through the PCC, to implement a grid connection of the photovoltaic power generation system.

With an increasing penetration rate of the new energy in the power grid, the power grid gradually shows a weak state. Specifically, a device between the power grid and the inverter is in an inductive impedance state. When active power output by the inverter increases, a loss on inductive impedance increases. This causes a decrease of a voltage of the PCC, affects stable operation of the power grid, and even causes a grid disconnection.

**SUMMARY**

This application provides a reactive power adjustment method and a photovoltaic power generation system, to resolve an undervoltage or overvoltage problem of a PCC and improve operation stability of a power grid.

According to a first aspect, an embodiment of this application provides a reactive power adjustment method, where the reactive power adjustment method may be applied to an inverter in a new energy system, and may be performed by a controller of the inverter. The inverter is connected to a power grid by using a grid-connected inverter, and a point of common coupling is included between the inverter and the power grid, which specifically includes the following steps:

monitoring a voltage of the point of common coupling;
when the voltage of the point of common coupling exceeds a preset range, generating a first drive signal by using a first reactive power value determined based on the voltage of the point of common coupling, and adjusting, based on the first drive signal, reactive power output by the inverter, to enable the voltage of the point of common coupling to be within the preset range; and when the voltage of the point of common coupling is within the preset range and a reactive scheduling instruction of the power grid is received, generating a second drive signal by using a second reactive power value determined based on the reactive scheduling instruction, and adjusting, based on the second drive signal, the reactive power output by the inverter.

By using the foregoing solution, when the voltage of the point of common coupling exceeds the preset range, the reactive power output by the inverter is preferentially adjusted based on the voltage of the point of common coupling, to adjust a voltage amplitude of the point of common coupling, so that the power grid runs stably. When the voltage of the point of common coupling is within the preset range, it represents stable operation of the power grid. Therefore, after the reactive scheduling instruction of the power grid is received, the reactive power output by the inverter may be adjusted based on the reactive scheduling instruction of the power grid, to satisfy a power requirement of the power grid and ensure stable operation of the power grid.

In a possible design, the method provided in the first aspect of embodiments of this application further includes: when the reactive scheduling instruction of the power grid is not received and the voltage of the point of common coupling is within the preset range, generating a third drive signal based on a preset third reactive power value, and adjusting, based on the third drive signal, the reactive power output by the inverter.

According to the foregoing solution, when the power grid runs normally and the voltage amplitude of the point of common coupling of the photovoltaic power generation system is normal, if the reactive scheduling instruction of the power grid is not received, it indicates that power currently output by the photovoltaic power generation system can satisfy the power requirement of the power grid, and therefore the preset third reactive power value output by the inverter can be controlled.

In a possible design, obtaining the first reactive power value based on the voltage of the point of common coupling includes: when the voltage of the point of common coupling is greater than a maximum value of the preset range, determining the first reactive power value based on a first difference between the voltage of the point of common coupling and the maximum value; or when the voltage of the point of common coupling is less than a minimum value of the preset range, determining the first reactive power value based on a second difference between the minimum value and the voltage of the point of common coupling.

By using the foregoing solution, a reactive power compensation apparatus is generally disposed on an inverter side of the photovoltaic power generation system, and a reactive power compensation value that needs to be output by the inverter side may be determined based on a difference between the current voltage amplitude of the point of common coupling and the preset range.

In a possible design, the first difference is in direct proportion to the first reactive power value, or the second difference is in direct proportion to the first reactive power value.

In a possible design, the when the voltage of the point of common coupling exceeds a preset range, generating a first drive signal by using a first reactive power value determined based on the voltage of the point of common coupling, and adjusting, based on the first drive signal, reactive power output by the inverter includes: generating the first drive signal by using the first reactive power value determined based on the voltage of the point of common coupling, and adjusting, based on the first drive signal, the reactive power output by the inverter until the voltage of the point of common coupling is within the preset range.

By using the foregoing solution, when the power grid has no fault, if a capability of outputting reactive power by the inverter can satisfy a voltage adjustment requirement of the point of common coupling, the first drive signal may be used to control the inverter to output a reactive power value that satisfies a compensation requirement, to control the voltage of the point of common coupling to recover to be within the preset range.

In a possible design, the when the voltage of the point of common coupling exceeds a preset range, generating a first drive signal by using a first reactive power value determined based on the voltage of the point of common coupling, and adjusting, based on the first drive signal, reactive power output by the inverter includes: generating the first drive signal by using the first reactive power value determined based on the voltage of the point of common coupling, adjusting, based on the first drive signal, the reactive power output by the inverter until the first reactive power value is equal to a set upper limit value, and stopping adjusting the reactive power output by the inverter.

By using the foregoing solution, when a power grid fault causes a decrease of the voltage of the point of common coupling or the capability of outputting reactive power of the inverter cannot satisfy the voltage adjustment requirement of the point of common coupling, the first drive signal is used to control the reactive power value output by the inverter to reach the upper limit value, to control the voltage of the point of common coupling to be stable as much as possible, and improve stability of the power grid.

According to a second aspect, an embodiment of this application provides a photovoltaic power generation system, where the photovoltaic power generation system includes a photovoltaic module, a direct current converter, and an inverter, the photovoltaic power generation system further includes a controller. The controller may be configured to: monitor a voltage of a point of common coupling; when the voltage of the point of common coupling exceeds a preset range, generate a first drive signal by using a first reactive power value determined based on the voltage of the point of common coupling, and adjust, based on the first drive signal, reactive power output by the inverter, to enable the voltage of the point of common coupling to be within the preset range; and when the voltage of the point of common coupling is within the preset range and a reactive scheduling instruction of a power grid is received, generate a second drive signal by using a second reactive power value determined based on the reactive scheduling instruction of the power grid, and adjust, based on the second drive signal, the reactive power output by the inverter.

In a possible design, the controller is further configured to: when the reactive scheduling instruction of the power grid is not received and the voltage of the point of common coupling is within the preset range, generate a third drive signal based on a preset third reactive power value, and adjust, based on the third drive signal, the reactive power output by the inverter.

In a possible design, the controller is specifically configured to: when the voltage of the point of common coupling is greater than a maximum value of the preset range, determine the first reactive power value based on a first difference between the voltage of the point of common coupling and the maximum value; or when the voltage of the point of common coupling is less than a minimum value of the preset range, determine the first reactive power value based on a second difference between the minimum value and the voltage of the point of common coupling.

In a possible design, the controller is specifically configured to: control the first difference to be in direct proportion to the first reactive power value, or control the second difference to be in direct proportion to the first reactive power value.

In a possible design, the controller is specifically configured to: generate the first drive signal by using the first reactive power value determined based on the voltage of the point of common coupling, and adjust, based on the first drive signal, the reactive power output by the inverter until the voltage of the point of common coupling is within the preset range.

In a possible design, the controller is specifically configured to: generate the first drive signal by using the first reactive power value determined based on the voltage of the point of common coupling, adjust, based on the first drive signal, the reactive power output by the inverter until the first reactive power value is equal to a set upper limit value, and stop adjusting the reactive power output by the inverter.

For technical effects that can be achieved in the second aspect, refer to descriptions of beneficial effects in the first aspect. Details are not described herein again.

## BRIEF DESCRIPTION OF DRAWINGS

FIG. 1 is a schematic diagram of a structure of a photovoltaic power generation system according to an embodiment of this application;
FIG. 2 is a schematic flowchart 1 of a reactive power adjustment method according to an embodiment of this application;
FIG. 3 is a schematic diagram 1 of a structure of a first controller according to an embodiment of this application;
FIG. 4 is a schematic diagram 2 of a structure of a first controller according to an embodiment of this application;
FIG. 5 is a diagram of a control architecture of a first controller according to an embodiment of this application;
FIG. 6 is a schematic diagram of a waveform output by an inverter according to an embodiment of this application; and
FIG. 7 is a schematic flowchart 2 of a reactive power adjustment method according to an embodiment of this application.

## DESCRIPTION OF EMBODIMENTS

To make the objective, technical solutions, and advantages of embodiments of this application clearer, the following describes embodiments of this application in detail with reference to the accompanying drawings. Terms used in implementations of this application are only used to explain specific embodiments of this application, but are not intended to limit this application. It is clear that the described embodiments are merely some rather than all of embodiments of this application. All other embodiments obtained by a person of ordinary skill in the art based on embodiments of this application without creative efforts shall fall within the protection scope of this application.

It should be noted that, the terms "first", "second", and the like in the specification, claims, and accompanying drawings of this application are intended to distinguish between similar objects but do not necessarily indicate a specific order or sequence. It should be understood that the data termed in such a way are interchangeable in proper circumstances so that embodiments of this application described herein can be implemented in an order other than the orders illustrated or described herein. Implementations described in the following example embodiments do not represent all implementations consistent with this application. On the contrary, the implementations are merely examples of apparatuses and methods that are described in the appended claims in detail and that are consistent with some aspects of this application.

The following describes some terms in embodiments of this application, to facilitate understanding of a person skilled in the art.

(1) In embodiments of this application, "a plurality of" means two or more, and another quantifier is similar to this.
(2) A switching transistor in embodiments of this application may be one or more of a plurality of types of switching transistors, such as a relay, a metal oxide semiconductor field effect transistor (metal oxide semiconductor field effect transistor, MOSFET), a bipolar junction transistor (bipolar junction transistor, BJT), an insulated gate bipolar transistor (insulated gate bipolar transistor, IGBT), and a silicon carbide (SiC) transistor. Details are not listed in embodiments of this application. The switching transistors may be packaged in a single-transistor package, or may be packaged in a multi-transistor package. This is not limited in embodiments of this application. Each switching transistor may include a first end, a second end, and a control end, where the control end is configured to control conduction or a disconnection of the switching transistor. When the switching transistor is conducted, a current may be transmitted between the first end and the second end of the switching transistor. When the switching transistor is disconnected, the current cannot be transmitted between the first end and the second end of the switching transistor. An MOSFET is used as an example. The control end of the switching transistor is a gate, and the first end of the switching transistor may be a source, and the second end may be a drain; or the first end may be a drain, and the second end may be a source.
(3) In embodiments of this application, "connection" may be understood as an electrical connection, and a connection between two electrical elements may be a direct or indirect connection between the two electrical elements. For example, a connection between A and B may represent that A and B are directly connected to each other, or A and B are indirectly connected to each other through one or more other electrical elements. For example, the connection between A and B may alternatively represent that A and C are directly connected to each other, C and B are directly connected to each other, and A and B are connected to each other through C. The "connection" in embodiments

4

of this application may alternatively be understood as a wireless connection, to be specific, a connection between two electrical elements may be an electromagnetic connection between the two electrical elements.

(4) Direct current and alternating current

The direct current in embodiments of this application refers to an electrical form in which electrical energy is conducted in a constant direction in a circuit. A conduction direction of the electrical energy is also referred to as a phase, and the phase of the direct current may be positive or negative. Electrical energy intensity of most direct currents is fixed. In some special direct currents (such as pulse direct currents), the electrical energy intensity also changes over time. The electrical energy intensity is also referred to as a current amplitude. Common direct current power supplies include a dry battery, a battery, a direct current generator, or the like. The alternating current in embodiments of this application refers to an electrical form in which electrical energy is conducted in a direction that changes periodically in a circuit. Electrical energy intensity of most alternating currents also changes periodically over time. A periodic change of the alternating current in a conduction direction is defined by a frequency of the alternating current. As the frequency of the alternating current increases, the alternating current can change the conduction direction faster, and as the frequency of the alternating current decreases, the alternating current can change the conduction direction slowly. Common alternating current power supplies include mains, industrial and agricultural power supplies, residential power supplies, and the like.

The following clearly and describes the technical solutions in embodiments of this application with reference to the accompanying drawings in embodiments of this application.

The solutions provided in this application may be applied to a new energy power generation system, and are applied to a grid-connected scenario of the new energy power generation system. During a grid-connected process of the new energy power generation system, output reactive power is controlled to be adjusted, to adjust a voltage amplitude of a point of common coupling. The new energy power generation system includes but is not limited to a photovoltaic power generation system, a wind power generation system, a water power generation system, or the like.

To facilitate understanding of the reactive power adjustment method and the photovoltaic power generation system that are provided in embodiments of this application, the following first describes an application scenario of the reactive power adjustment method.

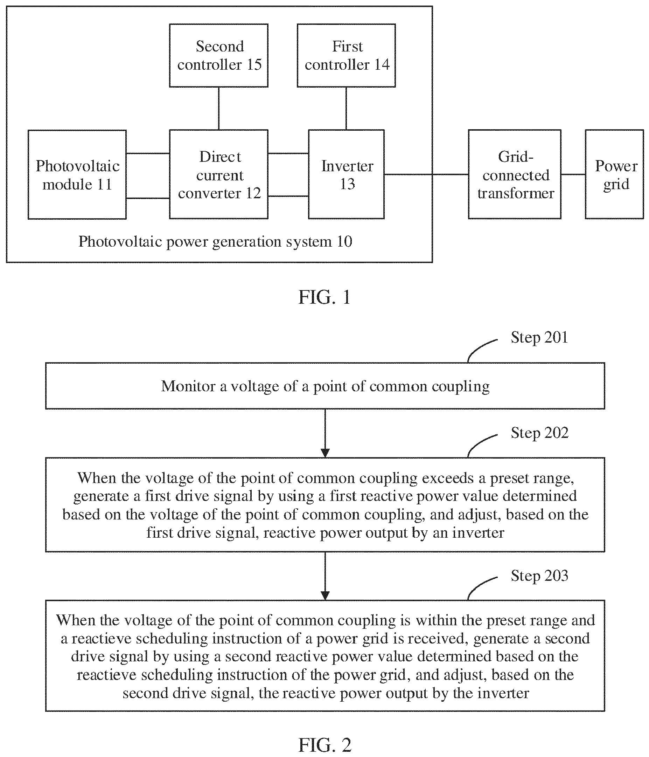

In a specific application scenario, the foregoing method may be applied to a grid-connected scenario of the photovoltaic power generation system, and is performed by a controller of an inverter the photovoltaic power generation system. FIG. 1 is an example schematic diagram of a structure of a photovoltaic power generation system. Refer to FIG. 1. The photovoltaic power generation system 10 mainly includes a photovoltaic module 11, a direct current converter 12, an inverter 13, a first controller 14 configured to control the inverter 13, and a second controller 15 configured to control the direct current converter 12. The photovoltaic module 11 is a device that generates electric energy in the photovoltaic power generation system 10.

In an example, the photovoltaic power generation system 10 may further include an energy storage apparatus and an energy storage converter. The energy storage apparatus may be a large-capacity and high-power battery. The energy storage apparatus may be a secondary battery. The secondary battery includes but is not limited to a lithium-ion battery, a sodium-ion battery, a potassium-ion battery, a magnesium-ion battery, a calcium-ion battery, an air battery, a lead-acid battery, a nickel-cadmium battery, or the like. A specific type of the secondary battery is not limited in this application, and only a battery that can implement charging and discharging is needed.

In a grid-connected process of the photovoltaic power generation system 10, the photovoltaic module 11 converts light energy into electric energy in a direct current form. The direct current converter 12 may obtain the electric energy from the photovoltaic module 11, perform voltage conversion on the obtained electric energy, and output converted electric energy. The inverter 13 may receive the electric energy output by the direct current converter 12, convert the electric energy in the direct current form output by the direct current converter 12 into electric energy in an alternating current form, and output the electric energy to a power grid by using a grid-connected transformer, to implement a grid connection of the photovoltaic power generation system 10.

Refer to FIG. 1. The inverter 13 mainly outputs, to the power grid by using a grid-connected inverter, the electric energy generated in the photovoltaic power generation system 10. A PCC is included between the inverter 13 and the power grid. During actual application, the grid-connected transformer and a transmission line are mainly disposed between the inverter 13 and the power grid, and the foregoing devices are in an inductive load state. Generally, a device between the power grid and the inverter 13 may be considered as inductive impedance. When active power output by the inverter 13 increases, because a voltage output by the inverter 13 is fixed, an active current flowing through inductive impedance increases, and voltage drops at two ends of the inductive impedance correspondingly increase. This causes a decrease of a voltage of the PCC, affects stable operation of the power grid, and even causes a grid disconnection of the photovoltaic power generation system 10.

In view of this, this application provides a reactive power adjustment method and a photovoltaic power generation system, to adjust a voltage amplitude of a PCC by adjusting a reactive power value output by an inverter, and ensure stable operation of a power grid.

Based on the architecture of the photovoltaic power generation system shown in FIG. 1, FIG. 2 is an example schematic flowchart of a reactive power adjustment method according to an embodiment of this application. The method is applicable to the architecture of the photovoltaic power generation system shown in FIG. 1, and is performed by a first controller 14 that controls a working state of an inverter. As shown in FIG. 2, the method includes the following steps.

Step 201: Monitor a voltage of a point of common coupling.

In an example, still refer to FIG. 1. In step 201, a voltage detection apparatus is connected between the first controller 14 and the PCC. The voltage detection apparatus may periodically detect a voltage amplitude of the PCC, and send the detected voltage amplitude to the first controller 14, so that the first controller 14 can monitor the voltage of the PCC.

In another example, still refer to FIG. 1. In step 201, the first controller 14 includes the voltage detection apparatus. The voltage detection apparatus is connected to the PCC, and periodically detects the voltage of the PCC, so that the first controller 14 monitors the voltage of the PCC.

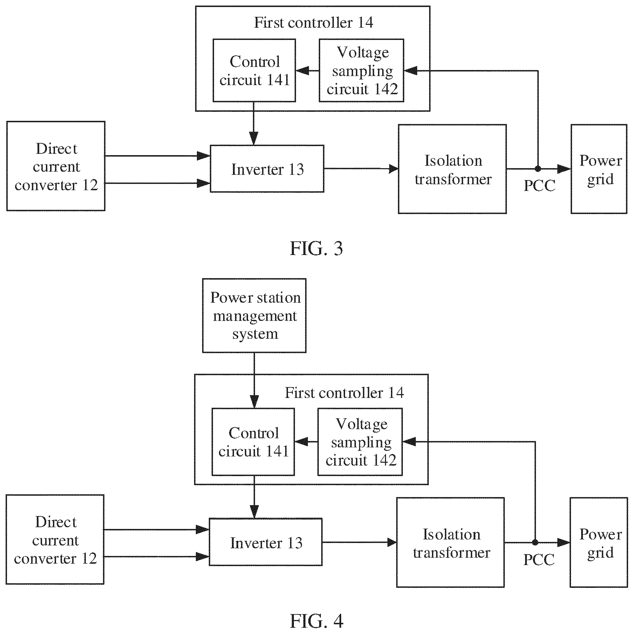

FIG. 3 is an example diagram of an architecture of a circuit for monitoring a voltage of a PCC by a first controller according to an embodiment of this application. As shown in FIG. 3, in this example, a first controller 14 includes a plurality of functional circuits, and a control circuit 141 and a voltage sampling circuit 142 are disposed in the first controller 14. The PCC between an inverter 13 and a power grid is a sampling point. An input end of the voltage sampling circuit 142 is connected to the sampling point, and an output end of the voltage sampling circuit 142 is connected to the control circuit 141. The control circuit 141 may obtain the voltage of the PCC by using the voltage sampling circuit 142. A specific type of the voltage sampling circuit 142 is not limited in this application, provided that voltage detection can be implemented.

During actual application, the voltage sampling circuit 142 may set a specific sampling frequency, to periodically sample the voltage of the PCC. The sampling frequency may be set based on an operating status of the photovoltaic power generation system or a selection of a user.

Step 202: When the voltage of the point of common coupling exceeds a preset range, generate a first drive signal by using a first reactive power value determined based on the voltage of the point of common coupling, and adjust, based on the first drive signal, reactive power output by the inverter.

Step 203: When the voltage of the point of common coupling is within the preset range and a reactive scheduling instruction of the power grid is received, generate a second drive signal by using a second reactive power value determined based on the reactive scheduling instruction of the power grid, and adjust, based on the second drive signal, the reactive power output by the inverter. The preset range is a fluctuation range of the voltage of the PCC when the power grid runs normally.

Refer to FIG. 4. The control circuit 141 may further be connected to an upper-layer device, namely, a power station management system, of the photovoltaic power generation system 10, and the power station management system may deliver a reactive scheduling instruction and an active scheduling instruction to the control circuit 141. After receiving the active scheduling instruction, the control circuit 141 adjusts an active power value output by the inverter 13, and after receiving the reactive scheduling instruction, adjusts a reactive power value output by the inverter 13, to satisfy a power requirement of the power grid. The active scheduling instruction and the reactive scheduling instruction are configured by the power station management system based on the power requirement of the power grid.

Still refer to FIG. 3 or FIG. 4. When the control circuit 141 detects, by using the voltage sampling circuit 142, that the voltage of the PCC exceeds the preset range, the control circuit 141 determines that the current voltage of the PCC is abnormal. In this case, no matter whether the control circuit 141 receives the reactive scheduling instruction delivered by the upper-layer device, the control circuit 141 preferentially adjusts, based on the current voltage amplitude of the PCC on a grid-connected side, the reactive power value output by the inverter, to adjust the voltage of the PCC, so that the power grid is in a stable state.

During actual use, after the control circuit 141 acquires the voltage of the PCC by using the voltage sampling circuit 142, if the voltage of the PCC is greater than a maximum value of the preset range, the control circuit 141 calculates a first difference between the voltage of the point of common coupling and the maximum value, and determines the first reactive power value based on the first difference. Specifically, the control circuit 141 may determine, by adopting the following formula (1.1), a first reactive power value Q1 for adjusting the voltage of the PCC:

$$Q1 = -g(U_{pcc} - U_{pcc\_UP}) \ (1.1)$$

$U_{pcc}$ is the voltage of the PCC, and $U_{pcc\_UP}$ is the maximum value of the preset range. The preset range is the fluctuation range of the voltage of the PCC when the power grid runs normally. The preset range may be set based on an operating status of the power grid or a selection of a user. For example, the preset range of the voltage of the PCC may be [1480 V, 1520 V]. The first difference is in direct proportion to the first reactive power value Q1.

During actual use, if the voltage of the PCC is less than a minimum value of the preset range, a second difference between the minimum value and the voltage of the point of common coupling is calculated, and the first reactive power value is determined based on the second difference. Specifically, the control circuit 141 may determine, by adopting the following formula (1.2), the first reactive power value Q1 for adjusting the voltage of the PCC:

$$Q1 = g(U_{pcc\_DN} - U_{pcc\_}) \ (1.2)$$

$U_{pcc\_DN}$ is the minimum value of the preset range, and the second difference is in direct proportion to the first reactive power value Q1.

After the control circuit calculates the first reactive power value by using the foregoing formula (1.1) or formula (1.2), the control circuit generates the corresponding first drive signal by using the first reactive power value, and sends the first drive signal to a plurality of switching transistors in the inverter 13, to control a conduction time sequence of the plurality of switching transistors in the inverter, and adjust the reactive power output by the inverter 13.

In an example, the control circuit 141 is connected to an external controller or a power station management system, receives the first reactive power value sent by the external controller or the power station management system, and generates the first drive signal by using the first reactive power value. The external controller or the power station management system may obtain the first reactive power value through calculation by using the formula (1.1) and the formula (1.2).

Referring to the foregoing formula (1.1) and formula (1.2), it can be learned that both the preset range and the voltage of the PCC are known quantities. In this case, only one unknown quantity of the first reactive power value Q1 exists in the foregoing formula. Therefore, the first reactive power value Q1 for adjusting the voltage of the PCC may be obtained by using the foregoing formula (1.1) or formula (1.2).

Still refer to the foregoing formula (1.1) and formula (1.2). Both the formula (1.1) and the formula (1.2) are g(x) functions, and an output result Q1 of the g(x) function is in direct proportion to an independent variable x. The g(x) function may be a linear function, or may be configured by using a proportion controller, an integrator, another combination, or a selection of a user.

During actual use, a reactive power compensation apparatus is disposed on an inverter 13 side. When the voltage of the PCC is lower than the minimum value $U_{pcc\_DN}$ of the preset range, switching of a capacitor in the reactive power compensation apparatus may be controlled to implement forward compensation, to increase the reactive power value output by the inverter 13, and improve a power factor of the system. Therefore, a current value passing through inductive impedance can be decreased, and voltages at two ends of the inductive impedance is decreased, to increase the voltage of the PCC. Similarly, when the voltage of the PCC is higher than the maximum value $U_{pcc\_UP}$ of the preset range, when a reactive power adjustment of the inverter is excessively large, switching of an inductor in the reactive power compensation apparatus may be controlled to implement negative compensation, to improve a power factor of the system. A current value passing through inductive impedance is increased, to control a decrease of the voltage of the PCC. In this embodiment of this application, when the reactive power compensation apparatus performs forward compensation, the first reactive power value output by the inverter 13 is greater than 0. On the contrary, when the reactive power compensation apparatus performs reverse compensation, the first reactive power value output by the inverter 13 is less than 0.

In an example, when the reactive power adjustment method shown in FIG. 2 is adopted to adjust the voltage of the PCC, if the power grid runs normally, and a reactive power compensation capability of the reactive power compensation apparatus can satisfy a voltage adjustment requirement of the PCC, in an adjustment process, the voltage amplitude of the PCC gradually approaches the preset range until the voltage amplitude of the PCC is within the preset range, and the inverter 13 is controlled to stop adjusting the reactive power, and a reactive power value obtained when the voltage amplitude of the PCC is within the preset range is used as the reactive power value finally output by the inverter.

In an example, the compensation capability of the reactive power compensation apparatus on the inverter side of the photovoltaic power generation system is limited. When the reactive power compensation capability of the reactive power compensation apparatus cannot satisfy the voltage requirement adjustment of the PCC, or a power grid fault causes a great decrease of the voltage of the PCC, if the first reactive power value output by the inverter reaches a set upper limit value that can be compensated by the reactive power compensation apparatus, and the voltage of the PCC is still outside the preset range, the inverter may be controlled to stop adjusting the output reactive power value, and the set upper limit value is used as the reactive power value output by the inverter. The set upper limit value may be set based on the reactive power compensation capability of the reactive power compensation apparatus and the selection of the user. For example, the set upper limit value may be 100% of a rated compensation value of the reactive power compensation apparatus, or may be 80% of the rated compensation value of the reactive power compensation apparatus.

It should be understood that, when the reactive power compensation capability of the reactive power compensation apparatus cannot satisfy the voltage adjustment requirement of the PCC, or the power grid fault causes a great decrease of the voltage of the PCC, although the voltage of the PCC cannot be within the preset range by using the foregoing reactive power adjustment method, the foregoing adjustment manner may enable the voltage amplitude of the PCC to be close to the preset range as much as possible, to further implement stable operation of the power grid.

It can be learned from the foregoing descriptions that, the foregoing adjustment manners are reactive power control policies when the voltage of the PCC exceeds the preset range. When the voltage of the PCC is within the preset range, it indicates that the power grid runs stably. If the reactive scheduling instruction delivered by the upper-layer device is received at this time, the reactive power value output by the inverter may be controlled, to satisfy a reactive power requirement of the power grid. Specifically, when monitoring the voltage of the PCC to be within the preset range and receiving the reactive scheduling instruction, the control circuit 141 may control, by using the reactive scheduling instruction, the inverter 13 to output the second reactive power value needed by the power grid, to satisfy the reactive power requirement of the power grid.

Still refer to FIG. 4. When the control circuit 141 receives the reactive scheduling instruction delivered by the power station management system, the control circuit 141 may determine a second reactive power value Q2 by adopting the following formula (1.3):

$$Q2 = Q_{cmd} \quad (1.3)$$

$Q_{cmd}$ is a reactive power scheduling value included in the reactive scheduling instruction.

After calculating the second reactive power value by using the foregoing formula (1.3), the control circuit generates the corresponding second drive signal by using the second reactive power value, and sends the second drive signal to the plurality of switching transistors in the inverter 13, to control the conduction time sequence of the plurality of switching transistors in the inverter, and adjust the reactive power output by the inverter 13.

In an example, the control circuit 141 is connected to an external controller or a power station management system, receives the second reactive power value sent by the external controller or the power station management system, and generates the second drive signal by using the second reactive power value. The external controller or the power station management system may obtain the second reactive power value through calculation by using the formula (1.3).

Still refer to FIG. 3 or FIG. 4. When the control circuit 141 monitors the voltage of the PCC to be within the preset range and does not receive the reactive scheduling instruction of the power station management system, the control circuit 141 may generate a third drive signal based on a preset third reactive power value, and adjust, based on the third drive signal, the reactive power output by the inverter.

Specifically, the control circuit 141 may determine the third reactive power value Q3 by using the following formula (1.4):

$$Q3 = Q_x \quad (1.4)$$

$Q_x$ is the set third reactive power value. $Q_x$ can be set based on a reactive power requirement of the power grid, an operating status of the photovoltaic power generation system, or a selection of a user. For example, $Q_x$ may be 0.

After calculating the third reactive power value by using the foregoing formula (1.4), the control circuit 141 generates the corresponding third drive signal by using the third reactive power value, and sends the third drive signal to the plurality of switching transistors in the inverter 13, to control the conduction time sequence of the plurality of switching transistors in the inverter, and adjust the reactive power output by the inverter 13.

In an example, the control circuit 141 is connected to an external controller or a power station management system, receives the third reactive power value sent by the external controller or the power station management system, and generates the third drive signal by using the third reactive power value. The external controller or the power station management system may obtain the third reactive power value through calculation by using the formula (1.4).

With reference to the foregoing descriptions, in this embodiment of this application, the control circuit 141 may determine, with reference to the following formula (1.5), the reactive power value output by the inverter:

$$f(Q1, Q2, Q3) = \begin{cases} g(Upcc - Upcc\_UP) \text{ or } g(Upcc\_DN - Upcc) \\ Q_{cmd} \text{ or } Q_x \end{cases} \quad (1.5)$$

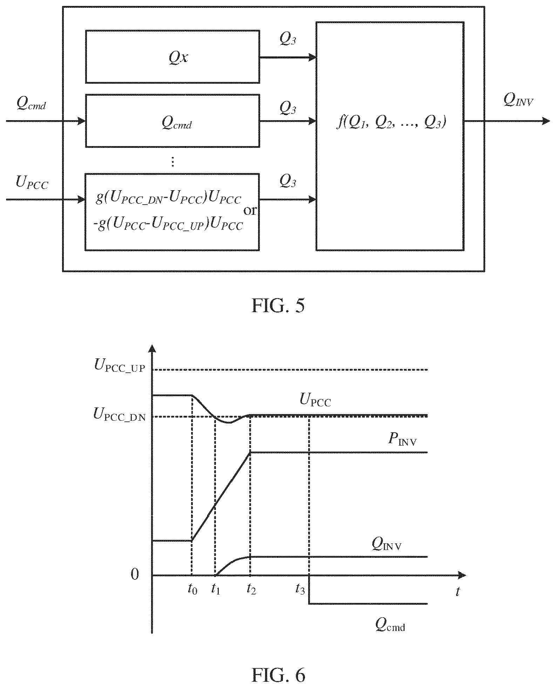

In specific implementation, for reactive power control logic of the control circuit 141, refer to FIG. 5.

With reference to FIG. 3 to FIG. 5 and the foregoing formulas, for a process in which the control circuit 141 controls the reactive power output by the inverter, refer to FIG. 6. Before a moment t0, the voltage $U_{pcc}$ of the point of common coupling is within the preset range, and in this case, the power grid runs normally. At the moment t0, active power $P_{INV}$ output by the inverter increases. When the active power $P_{INV}$ output by the inverter increases, a current flowing through a device between the inverter and the power grid also increases. As a result, a voltage drop between the inverter and the power grid increases, and the voltage $U_{pcc}$ of the point of common coupling decreases. At a moment t1, when $U_{pcc}$ is less than the minimum value $U_{pcc\_DN}$ of the preset range, the formula (1.2) may be used to calculate and output the first reactive power value Q1 for forward compensation. After synthesis of f(Q1, Q2, Q3), a reference reactive power value $Q_{INV}$ is output, and a corresponding drive signal is generated by using the reference reactive power value $Q_{INV}$, to control the inverter to output a corresponding reactive power value, support the voltage of the PCC, and recover a voltage of the power grid. As the active power $P_{INV}$ output by the inverter gradually increases between t1 and t2, correspondingly, the reactive power output by the inverter is adaptively adjusted by using the foregoing formulas, until both the active power $P_{INV}$ and the reactive power output $Q_{INV}$ by the inverter are, at the moment t2, in a stable state. In this case, the voltage $U_{pcc}$ of the point of common coupling is close to the minimum value $U_{pcc\_DN}$ of the preset range. If the reactive scheduling instruction delivered by the upper-layer device is received at a moment t3, and the reactive power scheduling value $Q_{cmd}$ included in the reactive scheduling instruction is a negative value, the reactive power instruction causes a decrease in a $U_{pcc}$ amplitude. Because $U_{pcc}$ is already near the minimum value $U_{pcc\_DN}$ of the preset range, the reactive power output by the inverter is still determined by using the foregoing control logic with reference to the formula (1.1), to maintain stability of the power grid.

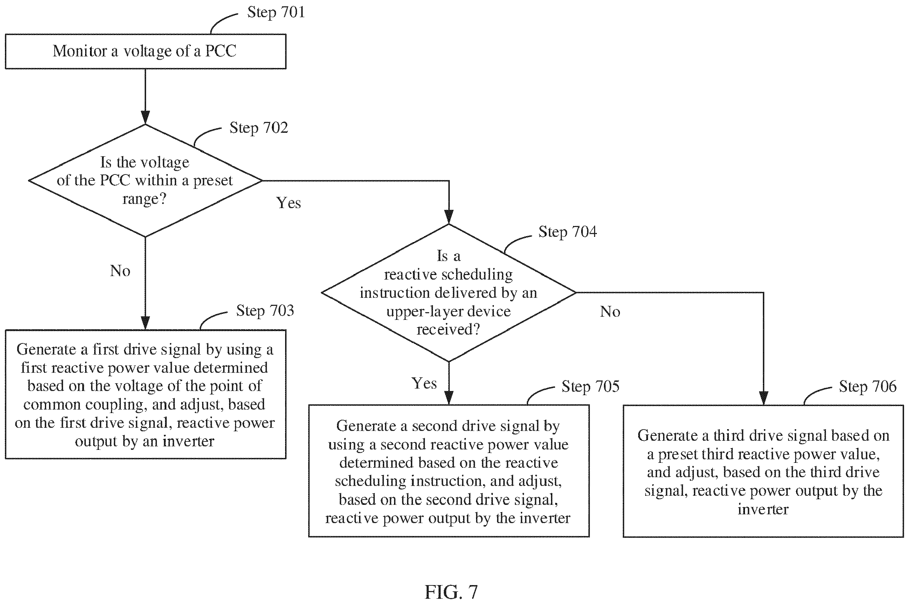

Based on the foregoing descriptions, for a reactive power control method provided in this embodiment of this application, refer to FIG. 7.

Step 701: Monitor a voltage of a PCC.

In an example, a voltage detection apparatus is connected between a first controller 14 and the PCC. The voltage detection apparatus may periodically detect a voltage amplitude of the PCC, and send the detected voltage amplitude to the first controller 14, so that the first controller 14 can monitor the voltage of the PCC.

In another example, the first controller 14 includes the voltage detection apparatus. The voltage detection apparatus is connected to the PCC, and periodically detects the voltage of the PCC, so that the first controller 14 monitors the voltage of the PCC.

Step 702: Determine whether the voltage of the PCC is within a preset range. If yes, perform step 704; otherwise, perform step 703.

The preset range is a fluctuation range of the voltage of the PCC when a power grid runs normally.

Step 703: Generate a first drive signal by using a first reactive power value determined based on the voltage of the point of common coupling, and adjust, based on the first drive signal, reactive power output by an inverter.

Step 704: Determine whether to receive a reactive scheduling instruction delivered by an upper-layer device. If yes, perform step 705; otherwise, perform step 706.

Step 705: Generate a second drive signal by using a second reactive power value determined based on the reactive scheduling instruction, and adjust, based on the second drive signal, the reactive power output by the inverter.

Step 706: Generate a third drive signal based on a preset third reactive power value, and adjust, based on the third drive signal, the reactive power output by the inverter.

Based on the foregoing descriptions, embodiments of this application further provide a photovoltaic power generation system. The photovoltaic power generation system includes a controller, and the controller is configured to: monitor a voltage of a point of common coupling; when the voltage of the point of common coupling exceeds a preset range, generate a first drive signal by using a first reactive power value determined based on the voltage of the point of common coupling, and adjust, based on the first drive signal, reactive power output by an inverter, to enable the voltage of the point of common coupling to be within the preset range; and when the voltage of the point of common coupling is within the preset range and a reactive scheduling instruction of a power grid is received, generate a second drive signal by using a second reactive power value determined based on the reactive scheduling instruction of the power grid, and adjust, based on the second drive signal, the reactive power output by the inverter.

In a possible implementation, the controller is further configured to: when the reactive scheduling instruction of the power grid is not received and the voltage of the point of common coupling is within the preset range, generate a third drive signal based on a preset third reactive power value, and adjust, based on the third drive signal, the reactive power output by the inverter.

In a possible implementation, the controller is specifically configured to: when the voltage of the point of common coupling is greater than a maximum value of the preset range, determine the first reactive power value based on a first difference between the voltage of the point of common coupling and the maximum value; or when the voltage of the point of common coupling is less than a minimum value of the preset range, determine the first reactive power value based on a second difference between the minimum value and the voltage of the point of common coupling.

In a possible implementation, the controller is specifically configured to: control the first difference to be in direct proportion to the first reactive power value, or control the second difference to be in direct proportion to the first reactive power value.

In a possible implementation, the controller is specifically configured to: when the voltage of the point of common coupling is greater than the maximum value of the preset range, determine that the first reactive power value is less than 0; or when the voltage of the point of common coupling is less than the minimum value of the preset range, determine that the first reactive power value is greater than 0.

In a possible implementation, the controller is specifically configured to: generate the first drive signal by using the first reactive power value determined based on the voltage of the point of common coupling, and adjust, based on the first drive signal, the reactive power output by the inverter until the voltage of the point of common coupling is within the preset range.

In a possible implementation, the controller is specifically configured to: generate the first drive signal by using the first reactive power value determined based on the voltage of the point of common coupling, adjust, based on the first drive signal, the reactive power output by the inverter until the first reactive power value is equal to a set upper limit value, and stop adjusting the reactive power output by the inverter.

According to the method described above, this application further provides a computer-readable storage medium. The computer-readable storage medium stores program code. When the program code is run on a computer, the computer is enabled to perform the method according to any one of the embodiments shown in FIG. 2 to FIG. 7.

According to the method provided in embodiments of this application, this application further provides a computer program product. The computer program product includes computer program code. When the computer program code is run on a computer, the computer is enabled to perform the method according to any one of the embodiments shown in FIG. 2 to FIG. 7.

According to the method provided in embodiments of this application, this application further provides a chip, for example, a chip in a controller. The chip is configured to perform the method in any one of the embodiments shown in FIG. 2 to FIG. 7.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that each procedure and/or block in the flowcharts and/or block diagrams, and combinations of the procedures and/or blocks in the flowcharts and/or block diagrams may be implemented by computer program instructions. These computer program instructions may be provided to a processor of a general-purpose computer, a special-purpose computer, an embedded processor, or another programmable data processing device to generate a machine, so that the instructions executed by the processor of the computer or another programmable data processing device generate an apparatus for implementing a specific function in one or more procedures in the flowcharts and/or one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. In this case, this application is intended to cover these modifications and variations of this application provided that they fall within the scope of protection defined by the claims of this application and their equivalent technologies.

## Claims

**1.** A reactive power adjustment method, applied to an inverter, wherein the inverter is connected to a power grid by using a grid-connected transformer, and a point of common coupling is comprised between the grid-connected transformer and the power grid, and the method comprises:

monitoring a voltage of the point of common coupling;

when the voltage of the point of common coupling exceeds a preset range, generating a first drive signal by using a first reactive power value determined based on the voltage of the point of common coupling, and adjusting, based on the first drive signal, reactive power output by the inverter, to enable the voltage of the point of common coupling to be within the preset range; and

when the voltage of the point of common coupling is within the preset range and a reactive scheduling in struction of the power grid is received, generating a second drive signal by using a second reactive power value determined based on the reactive scheduling instruction of the power grid, and adjusting, based on the second drive signal, the reactive power output by the inverter.

2. The method according to claim 1, wherein the method further comprises: when the reactive scheduling instruction of the power grid is not received and the voltage of the point of common coupling is within the preset range, generating a third drive signal based on a preset third reactive power value, and adjusting, based on the third drive signal, the reactive power output by the inverter.

3. The method according to claim 1 or 2, wherein the method further comprises:

   when the voltage of the point of common coupling is greater than a maximum value of the preset range, determining the first reactive power value based on a first difference between the voltage of the point of common coupling and the maximum value; or

   when the voltage of the point of common coupling is less than a minimum value of the preset range, determining the first reactive power value based on a second difference between the minimum value and the voltage of the point of common coupling.

4. The method according to claim 3, wherein the first difference is in direct proportion to the first reactive power value, or the second difference is in direct proportion to the first reactive power value.

5. The method according to any one of claims 1 to 4, wherein the when the voltage of the point of common coupling exceeds a preset range, generating a first drive signal by using a first reactive power value determined based on the voltage of the point of common coupling, and adjusting, based on the first drive signal, reactive power output by the inverter comprises:
   generating the first drive signal by using the first reactive power value determined based on the voltage of the point of common coupling, and adjusting, based on the first drive signal, the reactive power output by the inverter until the voltage of the point of common coupling is within the preset range.

6. The method according to any one of claims 1 to 5, wherein the when the voltage of the point of common coupling exceeds a preset range, generating a first drive signal by using a first reactive power value determined based on the voltage of the point of common coupling, and adjusting, based on the first drive signal, reactive power output by the inverter comprises:
   generating the first drive signal by using the first reactive power value determined based on the voltage of the point of common coupling, adjusting, based on the first drive signal, the reactive power output by the inverter until the first reactive power value is equal to a set upper limit value, and stopping adjusting the reactive power output by the inverter.

7. A photovoltaic power generation system, comprising a photovoltaic module, a direct current converter, and an inverter, and further comprising a controller, wherein the controller is configured to:

   monitor a voltage of a point of common coupling;

   when the voltage of the point of common coupling exceeds a preset range, generate a first drive signal by using a first reactive power value determined based on the voltage of the point of common coupling, and adjust, based on the first drive signal, reactive power output by the inverter, to enable the voltage of the point of common coupling to be within the preset range; and

   when the voltage of the point of common coupling is within the preset range and a reactive scheduling instruction of a power grid is received, generate a second drive signal by using a second reactive power value determined based on the reactive scheduling instruction of the power grid, and adjust, based on the second drive signal, the reactive power output by the inverter.

8. The system according to claim 7, wherein the controller is further configured to: when the reactive scheduling instruction of the power grid is not received and the voltage of the point of common coupling is within the preset range, generate a third drive signal based on a preset third reactive power value, and adjust, based on the third drive signal, the reactive power output by the inverter.

9. The system according to claim 7 or 8, wherein the controller is specifically configured to: when the voltage of the point of common coupling is greater than a maximum value of the preset range, determine the first reactive power value based on a first difference between the voltage of the point of common coupling and the maximum value; or when the voltage of the point of common coupling is less than a minimum value of the preset range, determine the first reactive power value based on a second difference between the minimum value and the voltage of the point of common coupling.

10. The system according to claim 9, wherein the controller is specifically configured to: control the first difference to be in direct proportion to the first reactive power value, or control the second difference to be in direct proportion to the first reactive power value.

11. The system according to any one of claims 7 to 10, wherein the controller is specifically configured to: generate the first drive signal by using the first reactive power value determined based on the voltage of the point of common coupling, and adjust, based on the first drive signal, the reactive power output by the inverter until the voltage of the point of common coupling is within the preset range.

12. The system according to any one of claims 7 to 11, wherein the controller is specifically configured to: generate the first drive signal by using the first reactive power value determined based on the voltage of the point of common coupling, adjust, based on the first drive signal, the reactive power output by the inverter until the first reactive power value is equal to a set upper limit value, and stop adjusting the reactive power output by the inverter.

Second
controller 15

First
controller 14

Photovoltaic
module 11

Direct
current
converter 12

Inverter
13

Grid-
connected
transformer

Power
grid

Photovoltaic power generation system 10

FIG. 1

Step 201

Monitor a voltage of a point of common coupling

Step 202

When the voltage of the point of common coupling exceeds a preset range, generate a first drive signal by using a first reactive power value determined based on the voltage of the point of common coupling, and adjust, based on the first drive signal, reactive power output by an inverter

Step 203

When the voltage of the point of common coupling is within the preset range and a reactieve scheduling instruction of a power grid is received, generate a second drive signal by using a second reactive power value determined based on the reactieve scheduling instruction of the power grid, and adjust, based on the second drive signal, the reactive power output by the inverter

FIG. 2

First controller 14

Control circuit 141 ← Voltage sampling circuit 142 ←

Direct current converter 12 → Inverter 13 → Isolation transformer — PCC → Power grid

**FIG. 3**

Power station management system ↓

First controller 14

Control circuit 141 ← Voltage sampling circuit 142 ←

Direct current converter 12 → Inverter 13 → Isolation transformer — PCC → Power grid

**FIG. 4**

FIG. 5

FIG. 6

Step 701

```
Monitor a voltage of a PCC
```

Step 702

Is the voltage
of the PCC within a preset
range?

Yes

No

Step 704

Is a
reactive scheduling
instruction delivered by an
upper-layer device
received?

No

Step 703

```
Generate a first drive signal by using a
first reactive power value determined
based on the voltage of the point of
common coupling, and adjust, based
on the first drive signal, reactive power
output by an inverter
```

Yes

Step 705

```
Generate a second drive signal by
using a second reactive power value
determined based on the reactive
scheduling instruction, and adjust,
based on the second drive signal,
reactive power output by the inverter
```

Step 706

```
Generate a third drive signal based on
a preset third reactive power value,
and adjust, based on the third drive
signal, reactive power output by the
inverter
```

FIG. 7

Europäisches
Patentamt

European
Patent Office

Office européen
des brevets

## EUROPEAN SEARCH REPORT

**Application Number**

**EP 23 19 4982**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/175887 A1 (SHAO MIAOLEI [US] ET AL) 26 June 2014 (2014-06-26) * paragraphs [0023] - [0026], [0042] - [0046], [0053] - [0059]; figures 1-9 * | 1-12 | INV. H02J3/16 H02J3/18 H02J3/38 H02J3/50 |
| A | US 8 922 062 B2 (JOHNSON LARS [US]; JOHNSON ROBERT [US]; SUNPOWER CORP [US]) 30 December 2014 (2014-12-30) * columns 1-6; figures 1-4 * | 1-12 | |
| A | US 7 923 862 B2 (GEN ELECTRIC [US]) 12 April 2011 (2011-04-12) * columns 1-3,5; figures 1-3 * | 1-12 | |
| A | WO 2021/223829 A1 (VESTAS WIND SYS AS [DK]) 11 November 2021 (2021-11-11) * pages 1-5; figures 1-7 * | 1-12 | |
| A | CN 112 039 119 A (GLOBAL ENERGY INTERCONNECTION RES INST CO LTD ET AL.) 4 December 2020 (2020-12-04) * paragraphs [0001] - [0024]; figures 1,3,7,9,12 * | 1-12 | TECHNICAL FIELDS SEARCHED (IPC) H02J |
| A | US 2022/014116 A1 (TANAKA MIWAKO [JP] ET AL) 13 January 2022 (2022-01-13) * paragraphs [0001] - [0008], [0024] - [0041]; figures 1-13 * | 1-12 | |

The present search report has been drawn up for all claims

| Place of search | Date of completion of the search | Examiner |
|---|---|---|
| Munich | 6 February 2024 | Krasser, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 4982

This annex lists the patent family members relating to the patent documents cited in the above-mentioned European search report.
The members are as contained in the European Patent Office EDP file on
The European Patent Office is in no way liable for these particulars which are merely given for the purpose of information.

06-02-2024

| Patent document cited in search report | | Publication date | Patent family member(s) | | Publication date |
|---|---|---|---|---|---|
| US 2014175887 | A1 | 26-06-2014 | US | 2014175887 A1 | 26-06-2014 |
| | | | WO | 2014099233 A1 | 26-06-2014 |
| US 8922062 | B2 | 30-12-2014 | AU | 2012229457 A1 | 12-09-2013 |
| | | | AU | 2016202027 A1 | 21-04-2016 |
| | | | CL | 2013002657 A1 | 08-08-2014 |
| | | | CN | 103988138 A | 13-08-2014 |
| | | | CN | 107026470 A | 08-08-2017 |
| | | | EP | 2686933 A2 | 22-01-2014 |
| | | | ES | 2744482 T3 | 25-02-2020 |
| | | | JP | 6244583 B2 | 13-12-2017 |
| | | | JP | 6342535 B2 | 13-06-2018 |
| | | | JP | 2014517663 A | 17-07-2014 |
| | | | JP | 2017131104 A | 27-07-2017 |
| | | | KR | 20140030143 A | 11-03-2014 |
| | | | US | 2012235498 A1 | 20-09-2012 |
| | | | US | 2015180366 A1 | 25-06-2015 |
| | | | US | 2016164300 A1 | 09-06-2016 |
| | | | WO | 2012125278 A2 | 20-09-2012 |
| US 7923862 | B2 | 12-04-2011 | CA | 2715932 A1 | 06-04-2011 |
| | | | CN | 102035208 A | 27-04-2011 |
| | | | EP | 2325716 A1 | 25-05-2011 |
| | | | ES | 2390445 T3 | 13-11-2012 |
| | | | US | 2010134076 A1 | 03-06-2010 |
| WO 2021223829 | A1 | 11-11-2021 | EP | 4147322 A1 | 15-03-2023 |
| | | | US | 2023178988 A1 | 08-06-2023 |
| | | | WO | 2021223829 A1 | 11-11-2021 |
| CN 112039119 | A | 04-12-2020 | NONE | | |
| US 2022014116 | A1 | 13-01-2022 | CN | 113261171 A | 13-08-2021 |
| | | | JP | 6537761 B1 | 03-07-2019 |
| | | | JP | WO2020144841 A1 | 18-02-2021 |
| | | | US | 2022014116 A1 | 13-01-2022 |
| | | | WO | 2020144841 A1 | 16-07-2020 |

EPO FORM P0459

For more details about this annex : see Official Journal of the European Patent Office, No. 12/82